(19) Europäisches Patentamt
European Patent Office
Office européen des brevets

(11) **EP 4 119 970 B1**

(12) **FASCICULE DE BREVET EUROPEEN**

(45) Date de publication et mention de la délivrance du brevet:
**08.05.2024 Bulletin 2024/19**

(21) Numéro de dépôt: **21305980.1**

(22) Date de dépôt: **13.07.2021**

(51) Classification Internationale des Brevets (IPC):
**G01S 1/02** $^{(2010.01)}$    **G01S 3/02** $^{(2006.01)}$

(52) Classification Coopérative des Brevets (CPC):
**G01S 1/022; G01S 3/023**

(54) **PROCÉDÉ DE DÉTERMINATION DE DONNÉES DE CALIBRATION D'UN APPAREIL DE GONIOMÉTRIE AÉROPORTÉ**

**VERFAHREN ZUR BESTIMMUNG DER KALIBRIERUNGSDATEN EINES LUFTGESTÜTZTEN PEILGERÄTS**

**METHOD FOR DETERMINING CALIBRATION DATA OF AN AIRBORNE GONIOMETRY DEVICE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**18.01.2023 Bulletin 2023/03**

(73) Titulaire: **Bull SAS**
**78340 Les Clayes-sous-Bois (FR)**

(72) Inventeur: **TENEZE, Bernard**
**13640 La Roque d'Anthéron (FR)**

(74) Mandataire: **IPAZ**
**Bâtiment Platon**
**Parc Les Algorithmes**
**91190 Saint-Aubin (FR)**

(56) Documents cités:
**CN-A- 111 273 224    US-A1- 2004 189 524**

- **LIBERO DINOI ET AL: "Direction Finding of ground based emitters from airborne platforms", RADAR CONFERENCE, 2008. RADAR '08. IEEE, IEEE, PISCATAWAY, NJ, USA, 26 mai 2008 (2008-05-26), pages 1-6, XP031376103, ISBN: 978-1-4244-1538-0**

EP 4 119 970 B1

**Description**

La présente invention concerne un procédé de détermination de données de calibration d'un appareil de goniométrie aéroporté. Elle concerne également un programme d'ordinateur et un appareil mettant en oeuvre un tel procédé, une table de calibration obtenue par un tel procédé et un appareil de goniométrie calibré avec un tel procédé.

Le domaine de l'invention est le domaine de la calibration des appareils de goniométrie aéroportés.

**État de la technique**

Un appareil de goniométrie aéroporté est généralement composé d'un réseau d'antennes, également appelé réseau antennaire, et d'au moins un récepteur relié audit réseau d'antennes. Il est utilisé pour détecter des émetteurs radiofréquences se trouvant au niveau du sol ou de la mer, et plus généralement à une altitude plus basse et survolée par le véhicule transportant ledit appareil de goniométrie aéroporté.

Pour déterminer la position de l'émetteur d'un signal radio reçu par l'appareil de goniométrie, ce dernier détermine la fréquence dudit signal reçu et mesure la valeur d'une grandeur prédéterminée. Ensuite, la valeur mesurée est comparée à des valeurs références mémorisées dans une table de calibration prédéterminée pour ladite fréquence, chacune en association avec une position angulaire. En identifiant, dans la table de calibration associée à la fréquence du signal, la valeur référence la plus proche de la valeur mesurée, il est possible de déterminer la position angulaire de l'émetteur du signal radio reçu, ce dernier pouvant alors être géolocalisé. Suivant un exemple de réalisation, la grandeur mesurée est une matrice de covariance, et la position angulaire est donnée par un couple d'angles : un angle de gisement (« gisement » dans la suite), un angle de site (« site » dans la suite).

La table de calibration est prédéterminée lors d'une phase de calibration pour une pluralité de positions angulaires. Par exemple, le document US 2004/189524 propose une solution pour déterminer des données de calibration d'un appareil de goniométrie selon le préambule de la revendication 1.

Suivant une première solution, la table de calibration peut être obtenue en laboratoire, et en particulier en chambre anéchoïde. Cette solution permet l'obtention d'une table de calibration complète avec un pas angulaire constant. Cependant, les valeurs de calibration obtenues avec cette première solution ne sont pas précises car elles ne correspondent pas aux conditions réelles d'utilisation de l'appareil de goniométrie.

Suivant une solution alternative, la table de calibration peut être déterminée en vol. Cette solution permet d'obtenir des valeurs de calibration plus précises car plus proches des conditions réelles d'utilisation. Cependant, cette solution ne permet pas l'obtention d'une table de calibration complète et équilibrée car la trajectoire du porteur aérien embarquant l'appareil de goniométrie n'est pas totalement prévisible, notamment à cause des dérives liées aux vents par exemple.

Un but de la présente invention est de remédier à au moins un des inconvénients précités.

Un autre but de la présente invention est de proposer une solution de détermination de données de calibration d'un appareil de goniométrie aéroporté permettant d'obtenir une table de calibration à la fois plus précise, plus complète et plus équilibrée.

**Exposé de l'invention**

L'invention permet d'atteindre au moins l'un de ces buts par un procédé, mis en oeuvre par ordinateur, pour déterminer des données de calibration d'un appareil de goniométrie aéroporté comprenant un réseau antennaire de plusieurs antennes, à partir de plusieurs jeux de données de calibration mesurés en vol par ledit appareil de goniométrie, chacun associé à une position angulaire mesurée et comprenant une donnée d'amplitude et une donnée de phase mesurées par chaque antenne dudit réseau antennaire à ladite position mesurée, ledit procédé comprenant, pour une position angulaire estimée, une phase de calcul d'un jeu de données de calibration estimé et comprenant les étapes suivantes :

- pour chaque position mesurée, normalisation du jeu de données mesuré à ladite position mesurée, par rapport à la donnée de phase mesurée par chaque antenne, ladite normalisation fournissant autant de jeux de données normalisés qu'il y a d'antennes pour chaque position mesurée ;
- pour chaque antenne, calcul d'un jeu de données candidat par interpolation des jeux de données mesurées auxdites positions mesurées et préalablement normalisés par rapport à la phase mesurée par ladite antenne ;
- pour au moins un jeu de données candidat, une étape de calcul de l'énergie dudit jeu de données candidat, comprenant les opérations suivantes:

    calcul de l'énergie associée à chaque antenne dans le jeu de données candidat, et
    calcul de l'énergie dudit jeu de données candidat en fonction de l'énergie associée à chaque antenne ; et

- sélection, comme jeu de données de calibration estimé, le jeu de données candidat dont la référence de phase est de plus haute énergie parmi lesdits jeux de données candidats.

Ainsi, le procédé selon l'invention permet d'obtenir, par interpolation, des données de calibration pour une ou plusieurs des positions angulaires pour lesquelles aucune donnée de calibration n'a été mesurée. Cela permet de construire, une table de calibration complète et bien équilibrée en ce qui concerne les positions angulaires.

De plus, le procédé selon l'invention permet de calculer des données de calibration pour des positions angulaires, par interpolation de données de calibration mesurées en vol, ce qui permet d'obtenir des données de calibration plus précises et plus proches de la réalité comparée à une calibration réalisée en chambre anéchoïque.

En outre, et surtout, le procédé selon l'invention permet de réaliser une interpolation sans utiliser une unique référence de phase pour toutes les positions angulaires estimées. Ainsi, pour chaque position angulaire estimée, la référence de phase utilisée pour l'interpolation peut potentiellement être différente. Par exemple, pour une première position estimée la référence de phase peut être une première antenne, et pour une deuxième position estimée la référence de phase peut être une deuxième antenne. De plus, dans le procédé selon l'invention, la référence de phase utilisée sera toujours celle qui présente le plus grand niveau d'énergie. Ainsi, le procédé selon l'invention permet d'obtenir, pour chaque position angulaire estimée, des données calibration estimées qui sont plus précises car moins impactées ou entachées par du bruit qui serait dû à une référence de phase dont l'énergie est trop faible. Par conséquent, les données de calibration obtenues par le procédé selon l'invention sont plus précises.

Le jeu de données mesuré pour une position angulaire comprend, pour chaque antenne, une donnée d'amplitude et une donnée de phase mesurée par ladite antenne à ladite position mesuré, en réponse à un signal de calibration émis par un émetteur de calibration. La donnée d'amplitude et la donnée de phase mesurée par une antenne peuvent former un vecteur complexe dont la partie réelle est formée par la donnée d'amplitude et la partie imaginaire par la donnée de phase. Dans ce cas, le jeu de données mesuré pour une position est formé par autant de vecteurs complexes qu'il y d'antennes dans le réseau antennaire, chaque vecteur étant associée à une antenne.

Dans la présente demande, par position angulaire, on entend une position définie par un angle de gisement et un angle de site. La position angulaire de l'appareil de goniométrie est la position relative dudit appareil de goniométrie par rapport à l'émetteur d'un signal radiofréquence. En d'autres termes, la position angulaire correspond à la position angulaire de réception du signal radiofréquence.

Dans la présente demande, par « porteur aérien », on entend tout véhicule volant ou aéronef, tel qu'un avion, un hélicoptère, un dirigeable, un ballon, un drone, etc.

Avantageusement, la phase de calcul peut comprendre une étape de calcul, pour la position estimée, d'une matrice de covariance, à partir du jeu de données estimé.

Cette matrice de covariance permet d'obtenir des données calibration qui sont indépendantes de la puissance d'émission de l'émetteur. Ainsi, les données de calibration obtenues peuvent être utilisées pour détecter des émetteurs radio, quelles que soient les puissances d'émission de ces émetteurs.

La matrice de covariance peut comprendre un vecteur représentatif de la différence en réception entre les antennes du réseau antennaire prises deux à deux. Le vecteur de différence peut avoir une partie réelle et une partie imaginaire.

De manière générale, pour au moins une position angulaire, la phase de calcul peut comprendre toute grandeur de référence calculée à partir du jeu de données calculées pour ladite position. Cette grandeur de référence peut être une matrice de covariance comme décrit plus haut, mais peut être toute autre grandeur.

L'énergie associée, ou captée par une antenne, peut être calculée suivant toute formule connue, et en particulier en calculant le module du vecteur complexe associé à ladite antenne et formé par la donnée d'amplitude et la donnée phase.

L'énergie du jeu de données candidat peut être calculé suivant toute relation connue ou prédéterminée prenant en entrée l'énergie associée à chaque antenne. En particulier, l'énergie du jeu de données candidat peut être calculée comme étant une moyenne des énergies associées à toutes les antennes dans ce jeu de données.

Dans une version particulièrement préférée, la phase de calcul peut être mise en oeuvre pour une pluralité de positions estimées pour construire une table de calibration comprenant une multitude de positions angulaires selon une distribution angulaire prédéterminée.

La distribution angulaire des positions angulaires de la table de calibration peut utiliser un pas angulaire constant de sorte que toutes les positions angulaires, prises deux à deux, sont séparées par un pas angulaire de même valeur.

La distribution angulaire des positions de la table de calibration peut utiliser un pas angulaire variable, qui peut par exemple être fonction de la fréquence du signal radio. Par exemple, plus la fréquence du signal radio diminue, plus le pas angulaire peut être fin et, *a contrario,* plus la fréquence du signal radio augmente, plus le pas angulaire peut être grand. Il est donc possible d'adapter la granularité de la table de calibration en fonction de la fréquence mesure.

La table de calibration peut uniquement comprendre des positions estimées, ou une combinaison de positions estimées et de positions mesurées.

La table de calibration peut comprendre uniquement des données de calibration estimées pour des positions estimées. Autrement dit, la table de calibration comprend uniquement des positions estimées.

Alternativement, la table de calibration peut comprendre des données de calibration estimées pour des positions estimées et des données de calibrations mesurée pour des positions mesurées. Autrement dit, la table de calibration comprend des positions estimées et des positions mesurées.

Avantageusement, la table de calibration comprend des positions angulaires distribuées suivant un pas angulaire constant, au moins pour chaque fréquence du signal radio.

Ainsi, il est possible de prévoir un pas angulaire constant pour une même fréquence et modifier le pas angulaire pour toutes ou une partie seulement des fréquences de mesures.

Un même pas angulaire peut être utilisé pour au moins deux, et en particulier, toutes les fréquences. Alternativement ou en plus, des pas angulaires différents peuvent être utilisés pour au moins deux, et en particulier, toutes les fréquences.

Dans tous les cas, l'invention permet de déterminer, avec une plus grande liberté la granularité de la table de calibration.

Pour au moins une position estimée, l'interpolation peut prendre en compte uniquement les jeux de données de calibrations mesurées pour les positions mesurées adjacentes entre lesquelles se trouve ladite position estimée.

Alternativement, pour chaque position estimé le jeu de données de données de calibration estimé peut être calculé en prenant en compte des jeux de données de calibration mesurées pour les positions mesurées adjacentes et pour d'autre positions mesurées, et potentiellement pour toutes les positions mesurées.

Pour au moins une position estimée, l'interpolation peut être réalisée par toute fonction d'interpolation.

Suivant un exemple de réalisation l'interpolation peut être réalisée par la fonction d'interpolation GRIDDATA, en MATLAB.

Le procédé selon l'invention peut en outre comprendre une phase d'acquisition, en vol, de jeux de données de calibration pour une pluralité de position angulaires mesurées, pour au moins une fréquence.

Cette phase de calibration est réalisée avant la première itération de la phase de calcul et permet de mesurer les données qui seront utilisées lors de la phase de calcul.

Lors de cette phase d'acquisition, l'appareil de goniométrie est embarqué par un porteur aérien et un émetteur de calibration, par exemple disposé au sol, émet des signaux de calibration. En chaque position angulaire de mesure et pour chaque fréquence, le signal de calibration est reçu par chaque antenne du réseau antennaire de l'appareil goniométrie et chaque antenne du réseau antennaire fournit un couple de données, ou un vecteur de données complexe, formée par une donnée d'amplitude et une donnée de phase reçue par ladite antenne.

Suivant un autre aspect de la présente invention, il est proposé un programme d'ordinateur comprenant des instructions informatiques qui lorsqu'elles sont exécutées par ordinateur mettent en oeuvre la phase de calcul du procédé selon l'une quelconque des revendications précédentes.

Le programme d'ordinateur peut être programmé en tout langage informatique tel que du C, C++, JAVA, Python, MATLAB, etc.

Suivant un autre aspect de la présente invention, il est prévu une table de calibration d'un appareil de goniométrie aéroporté obtenue par le procédé selon l'invention.

La table de calibration peut comprendre un jeu de données de calibration pour au moins une position angulaire estimée, et en particulier pour une multitude de positions angulaires estimées.

La table de calibration peut en outre comprendre un jeu de données de calibration pour au moins une position angulaire mesurée, en particulier pour une multitude de positions angulaires mesurées.

Les positions angulaires de la table de calibration peuvent être séparées d'un pas angulaire fixe ou variable, par exemple en fonction de la fréquence du signal radio émis par l'émetteur tel que décrit plus haut.

De manière générale, la table de calibration peut comporter l'équivalent de chacune des caractéristiques décrites plus haut en relation avec le procédé selon l'invention, et qui ne sont pas reprises ici par soucis de concision.

Préférentiellement, la table de calibration peut comprendre pour chaque position angulaire et chaque fréquence, une grandeur de référence, telle qu'une matrice de covariance, calculée à partir du jeu de données associé à ladite position angulaire à ladite fréquence.

Suivant un autre aspect de la présente invention, il est prévu un dispositif de traitement de données configuré pour mettre en oeuvre toutes les étapes de la phase de calcul du procédé selon l'invention.

Le dispositif selon l'invention peut être tout appareil informatique pouvant exécuter un programme informatique, tel qu'un ordinateur, un serveur, un processeur, une puce électronique programmable, etc.

Le dispositif selon l'invention peut être une machine physique ou une machine virtuelle.

Le dispositif selon l'invention peut comprendre un programme d'ordinateur selon l'invention.

Suivant un autre aspect de la présente invention, il est prévu un appareil de goniométrie aéroporté calibré par le procédé selon l'invention.

L'appareil de goniométrie aéroporté selon l'invention peut comprendre un dispositif selon l'invention.

L'appareil de goniométrie aéroporté selon l'invention selon l'invention peut comprendre un programme d'ordinateur selon l'invention.

## Description des figures et modes de réalisation

D'autres avantages et caractéristiques apparaîtront à l'examen de la description détaillée d'un mode de réalisation nullement limitatif, et des dessins annexés sur lesquels :

- les FIGURES 1a et 1b sont des représentations schématiques d'un exemple de réalisation non limitatif d'une configuration de calibration d'un appareil de goniométrie aéroporté pouvant être utilisée dans la présente invention ;
- la FIGURE 2 est une représentation schématique d'un exemple de réalisation non limitatif d'un procédé selon l'invention pour déterminer des données de calibration d'un appareil de goniométrie aéroporté ;
- la FIGURE 3 est une représentation schématique d'un exemple de réalisation non limitatif d'un procédé selon l'invention pour déterminer une table de calibration d'un appareil de goniométrie selon l'invention ; et
- les FIGURES 4a et 4b sont des représentations schématiques de tables de calibration d'un appareil de goniométrie selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures les éléments communs à plusieurs FIGURES conservent la même référence.

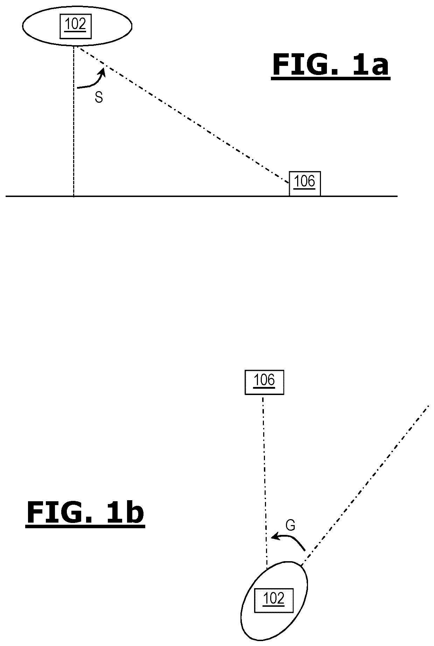

La FIGURES 1a et 1b sont des représentations schématiques d'un exemple de réalisation non limitatif d'une configuration de calibration d'un appareil de goniométrie aéroporté, respectivement vue de côté et vue de dessus.

Les FIGURES 1a et 1b montrent de manière schématique un appareil de goniométrie 102 transporté par un aéronef 104, tel que par exemple un avion 104, un hélicoptère, un dirigeable, un ballon, etc.

Un émetteur de calibration 106, dont la position est connue, est utilisé pour calibrer l'appareil de goniométrie aéroporté 102. L'émetteur de calibration 106 peut être fixe ou mobile. L'émetteur de calibration 106 peut par exemple être disposé au sol ou sur un véhicule.

La calibration de l'appareil de goniométrie 102 est réalisée de la manière suivante. Un signal de calibration de fréquence connue est envoyé par l'émetteur de calibration 106 à l'appareil de goniométrie 102. L'appareil de goniométrie 102 mesure la réponse en réception de chaque antenne du réseau antennaire pour le signal de calibration, à savoir un vecteur complexe dont la partie réelle est formée par une donnée d'amplitude et dont la partie imaginaire est formée par la donnée de phase. Les données mesurées sont mémorisées en association avec la fréquence d'émission connue et la position angulaire connue de l'émetteur de calibration 106 relativement à l'appareil de goniométrie aéroporté 102.

Pour chaque position angulaire de l'émetteur de calibration 106 par rapport à l'appareil de goniométrie aéroporté 102, la calibration est réitérée pour différentes fréquences, ou bandes de fréquences, en vue de balayer toute une large gamme de fréquences, dans le cadre d'une séquence de calibration.

La position de l'appareil de goniométrie est modifiée pour réitérer la calibration en une nouvelle position angulaire de sorte à balayer une étendue de positions angulaire, par exemple suivant une trajectoire de calibration.

Ainsi, en fin de calibration, une table de données de calibration est obtenue. Cette table comprend pour chaque couple {fréquence, position angulaire} un jeu de vecteurs complexes, chaque vecteur complexe correspondant à la réponse d'une antenne du réseau antennaire à un signal de calibration.

Suivant un exemple de réalisation non limitatif, une grandeur de référence peut être calculée, pour chaque fréquence et chaque position angulaire, à partir du jeu de données associé à ladite fréquence à ladite position angulaire. Par exemple, la grandeur de référence calculée peut être, de manière nullement limitative, une matrice de covariance indiquant les différences en réception entre lesdites antennes de réception, c'est-à-dire entre les vecteurs de complexes.

La position angulaire de l'émetteur de calibration 106 par rapport à l'appareil de goniométrie 102 peut être donnée par une combinaison de deux angles, à savoir :

- un angle de gisement, noté G, représenté sur la FIGURE 1b, qui correspond à l'angle, dans le plan horizontal, entre d'une part la direction reliant l'aéronef 104 et l'émetteur de calibration 106, et d'autre part une direction de référence, par exemple le nord magnétique ; et
- un angle de site, noté S, représenté sur la FIGURE 1a, correspondant à l'angle formé entre d'une part la direction verticale entre l'appareil de goniométrie 102 (donc de l'aéronef 104) et le sol, et d'autre part la direction reliant l'appareil de goniométrie 102 (donc de l'aéronef 104) et l'émetteur de calibration 106.

Ces angles peuvent être fournis, ou calculés à partir de données mesurées, par des capteurs équipant l'appareil de goniométrie 102 ou l'aéronef 104, tel que par exemple :

- un module GPS donnant la position de l'aéronef,
- un altimètre donnant l'altitude de l'aéronef, et
- éventuellement une centrale inertielle donnant l'attitude, c'est-à-dire l'orientation dans l'espace de l'aéronef 104 embarquant l'appareil de goniométrie 102.

Chaque signal de calibration émis par le générateur de calibration 106 peut être une salve de signaux (« burst » en anglais).

Comme indiqué plus haut, l'appareil de goniométrie 102 comprend un réseau antennaire formée par plusieurs antennes. Lors de la calibration, pour chaque position angulaire et pour chaque signal de calibration, chaque antenne reçoit et mesure un couple de données, à savoir une donnée d'amplitude et une donnée de phase. Ainsi, pour chaque position angulaire et pour chaque signal de calibration, l'appareil de goniométrie mesure un jeu de données formé par autant de couples de données {Amplitude, Phase} qu'il y a d'antennes dans le réseau antennaire. Ce jeu de données mesurées peut ensuite être utilisé pour calculer une donnée de calibration tel que par exemple une matrice de covariance entre les mesures effectuées par toutes les antennes du réseau antennaire.

Lorsque la calibration est réalisée en vol, les positions angulaires mesurées ne correspondent pas forcément exactement à celles souhaitées. Ainsi, à la fin d'une phase d'acquisition, les positions angulaires mesurées, ne sont pas réparties de manière souhaitées, par exemple avec un pas angulaire souhaité. Autrement dit, la calibration en vol ne permet pas l'obtention d'une table de calibration complète, régulière et équilibrée avec un pas angulaire constant car la trajectoire du porteur aérien embarquant l'appareil de goniométrie n'est pas totalement prévisible, notamment à cause des dérives liées aux vents par exemple.

L'invention permet de pallier cet inconvénient en proposant un procédé calcul de données de calibration pour au moins une position angulaire non mesurée, appelée « position angulaire estimée » ou « position estimée », par interpolation des données mesurées en vol pour plusieurs positions angulaires mesurées, également appelée « position mesurée » dans le présent document.

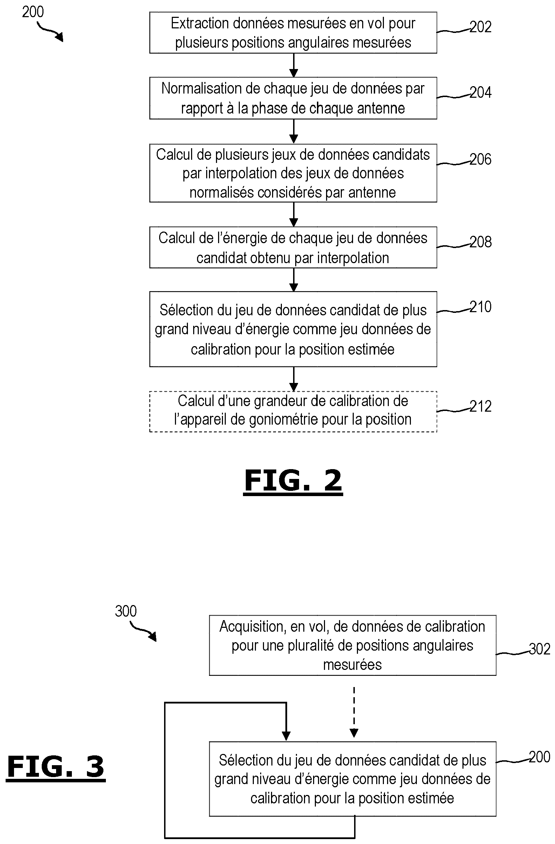

La FIGURE 2 est une représentation schématique d'un exemple de réalisation non limitatif d'un procédé selon l'invention.

Le procédé 200 de la FIGURE 2 permet de calculer des données calibration pour une position angulaire estimée, pour laquelle on ne dispose pas de données de calibration mesurées en vol, à partir de données de calibration mesurées en vol pour plusieurs positions angulaires mesurées, à la même fréquence.

Préférentiellement, les positions angulaires mesurées dont les données de calibration sont utilisées pour calculer les données de calibration de la position estimée sont des positions angulaires proches, ou autour de, ou encore entourant, ladite position estimée.

Le procédé 200 représenté sur la FIGURE 2 est décrite pour une position estimée. Le procédé 200 peut être réitérée autant de fois que souhaité pour calculer, individuellement, des données de calibration pour plusieurs positions estimées.

Le procédé 200 comprend une étape 202 lors de laquelle des données mesurées pour plusieurs positions angulaires mesurées sont extraites. Ces données mesurées seront utilisés pour calculer par interpolation des données de calibration pour une position angulaire estimée. Par exemple, lors de l'étape 202, les données mesurées pour M positions $POSM^1$-$POSM^M$ sont extraites. En considérant que le réseau antennaire comprend K antennes, les données mesurées pour chaque position $POSM^m$ correspondent à un jeu de K couples de données, chaque couple correspondant à une des K antennes et comprenant une donnée d'amplitude et une donnée de phase mesurées par ladite antenne. Ainsi, le jeu de données mesurées pour la position $POSM^m$ correspond à !

$$POSM^m = \{(AM_1^m, PH_1^m), \ldots, (AM_k^m, PH_k^m), \ldots, (AM_K^m, PH_K^m)\}$$

avec

$$1 \leq m \leq M \text{ et } 1 \leq k \leq K$$

Lors d'une étape 204, le jeu de données mesurée pour une chaque position mesurées $POSM^m$ est normalisée par rapport à la phase mesurée par chaque antenne du réseau antennaire. La normalisation du jeu de données par rapport à la phase d'une antenne peut être réalisée en divisant les données de phase mesurées par toutes les antennes par la donnée de phase de ladite antenne. Ainsi, lors de cette étape 204, on obtient K jeux de données pour chaque position mesurée POSM$^m$. Par exemple, pour le jeu de données POSM$^m$, mesurée pour la position mesurée « m », on obtient les K jeux de données suivants normalisés :

$$POSM^{m/1}= \{(AM_1^m,1), ... , (AM_K^m,PH_K^m/PH_1^m), ... , (AM_K^m,PH_K^m/PH_1^m)\},$$

normalisé par rapport à la phase de l'antenne 1

...

$$POSM^{m/k}= \{(AM_1^m,PH_1^m/PH_k^m), ... , (AM_K^m,1), ... , (AM_K^m,PH_K^m/PH_k^m)\},$$

normalisé par rapport à la phase de l'antenne k

...

$$POSM^{m/K}= \{(AM_1^m,PH_1^m/PH_K^m), ... , (AM_K^m,PH_K^m/PH_K^m), ... , (AM_K^m,1)\},$$

normalisé par rapport à la phase de l'antenne K

Lors d'une étape 206, K jeux de données candidats sont calculés par interpolation pour la position estimée, en considérant les données normalisées antenne par antenne.

Autrement dit, pour toutes les positions mesurées, on considère d'abord les données normalisées par rapport à l'antenne 1 : POSM$^{1/1}$-POSM$^{M/1}$. Ces données normalisées POSM$^{1/1}$-POSM$^{M/1}$ sont utilisées pour calculer par interpolation un jeu de données candidat, noté POSE$^{/1}$, pour la position estimée POSE. Le jeu de données candidat POSE$^{/1}$ est donc obtenu en prenant comme référence de phase l'antenne 1. La même opération est réitérée avec le jeu de données normalisées par rapport à l'antenne 2 : PSOM$^{1/2}$-POSM$^{M/2}$ pour calculer un jeu données candidat POSE$^{/2}$ obtenu en prenant comme référence de phase l'antenne 2, et ainsi de suite de sorte que l'étape 206 fournit K jeux de données candidats POSE$^{/1}$-POSE$^{/K}$, chacun obtenu en prenant comme référence la phase de l'une des antennes du réseau antennaire. Il est à noter que chaque jeu de données candidat POSE$^{/k}$, avec $1 \leq k \leq K$, autant de couples de données (AM, PH) qu'il y a d'antennes dans le réseau antennaire de sorte que le jeu de données candidat obtenu par rapport à l'antenne k peut être :

$$POSE^{/k}= \{(AM_1^{/k},PH_1^{/k}), ..., (AM_k^{/k},PH_k^{/k}), ..., (AM_K^{/k},PH_K^{/k})\}$$

avec

$$1 \leq k \leq K$$

Lors de cette étape 206, chaque jeu de données candidat est calculé par utilisation d'une fonction d'interpolation, telle que par exemple la fonction GRIDDATA, en MATLAB.

Lors d'une étape 208, l'énergie de chaque jeu de données candidat POSE$^{/k}$, avec $1 \leq k \leq K$, est calculée. Cette énergie peut être calculée de différentes manières.

Suivant un exemple de réalisation, l'énergie de chaque jeu de données candidat POSE$^{/k}$ est calculé de la manière suivante. Tout d'abord l'énergie de chaque couple de données $(AM_K^{/k},PH_K^{/k})$ formant le jeu de données candidat est calculée. Pour chaque couple de données, l'énergie peut par exemple correspondre au module du vecteur complexe formé par ce couple de données. Ensuite, l'énergie du jeu de données candidat POSE$^{/k}$ peut être calculée en fonction de l'énergie de chaque couple de données formant ledit jeu de données candidat. Par exemple, l'énergie du jeu de données candidat peut correspondre à la moyenne des énergies des couples de données formant ledit jeu de données candidat.

Le procédé 200 comprend ensuite une étape 210, lors de laquelle le jeu de données candidat présentant le plus grand niveau d'énergie est sélectionné comme jeu de données estimé pour la position estimé POSE.

Optionnellement, le procédé 200 peut avantageusement comprendre une étape 212 calculant une grandeur de calibration pour la position estimé POSE. Cette grandeur de calibration peut être une matrice de covariance obtenue à partir du jeu de données estimé choisie à l'étape 210. Ainsi, à l'issue de l'étape 212, une grandeur de calibration est obtenue par interpolation pour une position angulaire estimée et pour une fréquence pour laquelle aucune donnée de calibration n'a été mesurée en vol.

Le procédé 200 peut être réitérée pour autant de positions angulaires estimées que souhaitées pour construire une table de calibration complète et équilibrée en termes de positions angulaires.

Selon l'invention, une telle table de calibration peut être obtenue sans utiliser une unique référence de phase pour toute les positions angulaires estimées. Ainsi, pour chaque position angulaire estimée, la référence de phase utilisée pour l'interpolation peut potentiellement être différente. De plus, selon l'invention, la référence de phase utilisée pour chaque position estimée sera toujours celle qui présente le plus grand niveau d'énergie. Ainsi, l'invention permet d'obtenir, pour une (chaque) position angulaire estimée, des données calibration estimées qui sont plus précises car moins impactées ou entachées par du bruit qui serait dû à une référence de phase dont l'énergie est trop faible. Par conséquent, les données de calibration obtenues par le procédé selon l'invention sont plus précises.

La FIGURE 3 est une représentation schématique d'un exemple de réalisation non limitatif d'un procédé selon l'invention pour déterminer une table de de données calibration d'un appareil de goniométrie selon l'invention.

Le procédé 300 de la FIGURE 3 permet de déterminer une table de données de calibration comprenant, pour une multitude de positions angulaires et de fréquences donnée, de données de calibration d'un appareil de goniométrie aéroporté.

Le procédé comprend une phase 302 de mesure de données de calibration pour une pluralité de positions angulaires mesurées. Cette phase 302 d'acquisition est réalisée dans la configuration montrée dans les FIGURE 1a et 1b, c'est-à-dire lorsque l'appareil de goniométrie est embarqué par un porteur aérien. La phase d'acquisition fournit des données pour une pluralité de positions angulaires qui sont pas distribuées de manière irrégulière.

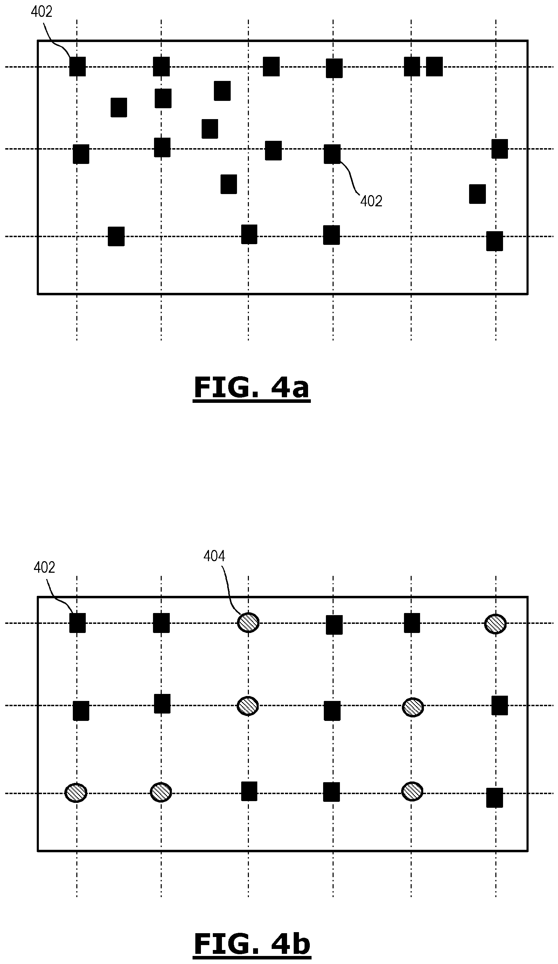

Un exemple de distribution des positions angulaires mesurées 402 est montré en FIGURE 4a. Chaque position angulaire mesurée est représentée par un rectangle. On y voit clairement que les positions angulaires ne sont pas distribuées de manière régulière, qu'il existe des zones dans lesquelles il n'y pas de positions angulaire mesurées et des zones comprenant trop de positions angulaires mesurées.

Le procédé 300 comprend ensuite au moins une itération d'un calcul données de calibration pour au moins une position angulaire estimée, à partir des données mesurées en vol lors de le phase d'acquisition. Le calcul de données de calibration estimées pour une position estimée peut en particulier être réalisée selon le procédé 200 de la FIGURE 2.

Préférentiellement, le procédé 200 peut être réitéré pour une pluralité de positions angulaires de sorte à obtenir une multitude de positions angulaires, pour lesquelles on dispose de données de calibration, qui sont distribués de manière régulière suivant un pas souhaité, constant ou variable.

Un exemple de distribution des positions angulaires ainsi obtenue est montré en FIGURE 4b. Chaque position angulaire mesurée 402 est représentée par un rectangle et chaque position angulaire estimée 404 est représentée par un cercle. On voit clairement que, dans la table de calibration de la FIGURE 4b, les positions angulaires sont distribuées de manière régulière et suivant un pas souhaité, et en particulier constant. De plus, toutes les zones sont couvertes et il n'existe aucune zone pour laquelle on ne dispose pas de données calibration.

Dans le procédé 300, la phase d'acquisition est réalisée avant la première itération du procédé 200. La première itération du procédé 200 peut être réalisée après avoir terminée la phase d'acquisition. Alternativement, la première itération du procédé 200 peut être réalisée/déclenchée sans attendre la fin de la phase d'acquisition.

De plus, le procédé 300 peut être réitéré pour chaque fréquence radio concernée par la calibration. Dans ce cas, la phase d'acquisition 302 peut être commune à plusieurs, voire toutes les fréquences radio.

L'invention concerne également un dispositif de traitement de données configuré pour mettre en oeuvre toutes les étapes du procédé selon l'invention, et en particulier le procédé 200 de la FIGURE 2. Un tel dispositif, non représenté sur les FIGURES peut être un ordinateur, un serveur, un processeur, une puce électronique programmable, etc. configuré pour mettre en oeuvre toutes les étapes du procédé, par exemple grâce à un programme d'ordinateur.

Le dispositif selon l'invention peut être une machine physique ou une machine virtuelle.

L'invention concerne également un appareil de goniométrie configuré, ou comprenant une table de table de calibration calculée, par un procédé selon l'invention, et en particulier par le procédé 200 de la FIGURE 2.

Bien entendu, l'invention n'est pas limitée aux exemples détaillés cidessus donnés à titre d'illustration et la portée générale de l'invention est définie dans les revendications.

## Revendications

1. Procédé (300), mis en oeuvre par ordinateur, pour déterminer des données de calibration d'un appareil de goniométrie aéroporté (102) comprenant un réseau antennaire de plusieurs antennes, à partir de plusieurs jeux de données de calibration mesurés en vol par ledit appareil de goniométrie (102), chacun associé à une position angulaire mesurée et comprenant une donnée d'amplitude et une donnée de phase mesurées par chaque antenne dudit réseau antennaire à ladite position mesurée, ledit procédé (300) comprenant, pour une position angulaire estimée (404), une phase (200) de calcul d'un jeu de données de calibration estimé, **caractérisé en ce que** ladite phase (200) de calcul comprend les étapes suivantes :

- pour chaque position mesurée (402), normalisation (204) du jeu de données mesuré à ladite position mesurée, par rapport à la donnée de phase mesurée par chaque antenne, ladite normalisation fournissant autant de jeux de données normalisés qu'il y a d'antennes pour chaque position mesurée ;
- pour chaque antenne, calcul (206) d'un jeu de données candidat par interpolation des jeux de données mesurées auxdites positions mesurées (402) et préalablement normalisés par rapport à la phase mesurée par ladite antenne ;
- pour au moins un jeu de données candidat, une étape (208) de calcul de l'énergie dudit jeu de données candidat, comprenant les opérations suivantes :

  • calcul de l'énergie associée à chaque antenne dans le jeu de données candidat, et
  • calcul de l'énergie dudit jeu de données candidat en fonction de l'énergie associée à chaque antenne ; et

- sélection (210), comme jeu de données de calibration estimé, le jeu de données candidat dont la référence de phase est de plus haute énergie parmi lesdits jeux de données candidats

2. Procédé (300) selon la revendication précédente, **caractérisé en ce que** la phase de calcul (200) comprend une étape (212) de calcul, pour la position estimée (404), d'une matrice de covariance, à partir du jeu de données estimé, ladite matrice de covariance comprenant un vecteur représentatif de la différence en réception entre les antennes du réseau antennaire prises deux à deux.

3. Procédé (300) selon l'une quelconque des revendications précédentes, **caractérisé en ce que** la phase de calcul (200) est mise en oeuvre pour une pluralité de positions estimées (404) pour construire une table de calibration comprenant une multitude de positions angulaires (402,404) selon une distribution angulaire prédéterminée.

4. Procédé (300) selon la revendication précédente, **caractérisé en ce que** la table de calibration comprend uniquement des positions estimées, ou une combinaison de positions estimées (404) et de positions mesurées (402).

5. Procédé (300) selon la revendication précédente, **caractérisé en ce que** la table de calibration comprend des positions angulaires (402,404) distribuées suivant un pas angulaire constant.

6. Procédé (300) selon l'une quelconque des revendications précédentes, **caractérisé en ce que**, pour au moins une position estimée (404), l'interpolation prend en compte uniquement les jeux de données de calibration mesurées pour les positions mesurées (402) adjacentes entre lesquelles se trouve ladite position estimée (404=.

7. Procédé (300) selon l'une quelconque des revendications précédentes, **caractérisé en ce que**, pour au moins une position estimée (404), l'interpolation est réalisée par la fonction d'interpolation GRIDDATA.

8. Procédé (300) selon l'une quelconque des revendications précédentes, **caractérisé en ce qu'**il comprend une phase (302) d'acquisition, en vol, de jeux de données de calibration pour une pluralité de position angulaires mesurées, pour au moins une fréquence.

9. Programme d'ordinateur comprenant des instructions informatiques qui lorsqu'elles sont exécutées par ordinateur mettent en oeuvre la phase de calcul (200) du procédé (300) selon l'une quelconque des revendications précédentes.

10. Table de calibration d'un appareil de goniométrie aéroporté (102) obtenue par le procédé (300) selon l'une quelconque des revendications 1 à 8.

11. Dispositif de traitement de données configuré pour mettre en oeuvre toutes les étapes de la phase de calcul (200) du procédé (300) selon l'une quelconque des revendications 1 à 8.

12. Appareil de goniométrie aéroporté (102) calibré par le procédé (300) selon l'une quelconque des revendications 1 à 8.

**Patentansprüche**

1. Computerimplementiertes Verfahren (300) zum Bestimmen von Kalibrierungsdaten einer Bordpeileinrichtung (102), umfassend eine Antennenanordnung aus mehreren Antennen, aus mehreren Sätzen von Kalibrierungsdaten, die durch die Peileinrichtung (102) im Flug gemessen wurden, die jeweils einer gemessenen Winkelposition zugeordnet sind und Amplitudendaten und Phasendaten umfassen, die durch jede Antenne der Antennenanordnung an der gemessenen Position gemessen werden, das Verfahren (300) umfassend, für eine geschätzte Winkelposition (404), eine Phase (200) der Berechnung eines geschätzten Kalibrierungsdatensatzes, **dadurch gekennzeichnet, dass** die Berechnungsphase (200) die folgenden Schritte umfasst:

   - für jede gemessene Position (402), Normalisieren (204) des an der gemessenen Position gemessenen Datensatzes in Bezug auf die Phasendaten, die durch jede Antenne gemessen werden, wobei das Normalisieren so viele normalisierte Datensätze liefert, wie es Antennen für jede gemessene Position gibt;
   - für jede Antenne, Berechnen (206) eines Kandidaten-Datensatzes durch Interpolation der gemessenen und vorher in Bezug auf die durch die Antenne gemessene Phase normalisierten Datensätze an den gemessenen Positionen (402);
   - für mindestens einen Kandidaten-Datensatz einen Schritt (208) zum Berechnen der Energie des Kandidaten-Datensatzes, umfassend die folgenden Schritte:

      • Berechnen der Energie, die mit jeder Antenne in dem Kandidaten-Datensatz verbunden ist, und
      • Berechnen der Energie des Kandidaten-Datensatzes abhängig von der Energie, die mit jeder Antenne verbunden ist; und

   - Auswählen (210) des Kandidaten-Datensatzes, dessen Phasenreferenz die höchste Energie besitzt, als geschätzten Kalibrierungsdatensatz unter den Kandidaten-Datensätzen.

2. Verfahren (300) nach dem vorstehenden Anspruch,
   **dadurch gekennzeichnet, dass** die Berechnungsphase (200) einen Schritt (212) zum Berechnen, für die geschätzte Position (404), einer Kovarianzmatrix aus dem geschätzten Datensatz umfasst, die Kovarianzmatrix umfassend einen Vektor, der die Empfangsdifferenz zwischen den paarweise genommenen Antennen der Antennenanordnung abbildet.

3. Verfahren (300) nach einem der vorstehenden Ansprüche,
   **dadurch gekennzeichnet, dass** die Berechnungsphase (200) für eine Vielzahl von geschätzten Positionen (404) durchgeführt wird, um eine Kalibrierungstabelle zu konstruieren, umfassend eine Mehrzahl von Winkelpositionen (402, 404) gemäß einer vorbestimmten Winkelverteilung.

4. Verfahren (300) nach dem vorstehenden Anspruch,
   **dadurch gekennzeichnet, dass** die Kalibrierungstabelle nur geschätzte Positionen oder eine Kombination aus geschätzten Positionen (404) und gemessenen Positionen (402) umfasst.

5. Verfahren (300) nach dem vorstehenden Anspruch,
   **dadurch gekennzeichnet, dass** die Kalibrierungstabelle Winkelpositionen (402, 404), die laut einem konstanten Teilwinkel verteilt sind, umfasst.

6. Verfahren (300) nach einem der vorstehenden Ansprüche,
   **dadurch gekennzeichnet, dass** für mindestens eine geschätzte Position (404) die Interpolation nur die gemessenen Kalibrierungsdatensätze für die angrenzenden gemessenen Positionen (402), zwischen denen die geschätzte Position (404) liegt, berücksichtigt.

7. Verfahren (300) nach einem der vorstehenden Ansprüche,
   **dadurch gekennzeichnet, dass** für mindestens eine geschätzte Position (404) die Interpolation durch die Interpolationsfunktion GRIDDATA durchgeführt wird.

8. Verfahren (300) nach einem der vorstehenden Ansprüche,
   **dadurch gekennzeichnet, dass** es eine Phase (302) zum Erfassen, im Flug, von Kalibrierungsdatensätzen für eine Vielzahl von gemessenen Winkelpositionen für mindestens eine Frequenz umfasst.

9. Computerprogramm, umfassend Computeranweisungen, die, wenn sie durch einen Computer ausgeführt werden, die Berechnungsphase (200) des Verfahrens (300) nach einem der vorstehenden Ansprüche implementieren.

10. Kalibrierungstabelle einer Bordpeileinrichtung (102), die durch das Verfahren (300) nach einem der Ansprüche 1 bis 8 erhalten wird.

11. Datenverarbeitungsvorrichtung, die konfiguriert ist, um sämtliche der Schritte der Berechnungsphase (200) des Verfahrens (300) nach einem der Ansprüche 1 bis 8 zu implementieren.

12. Bordpeileinrichtung (102), die durch das Verfahren (300) nach einem der Ansprüche 1 bis 8 kalibriert ist.


**Claims**

1. A computer-implemented method (300) for determining calibration data for an airborne goniometry apparatus (102) comprising an antenna array of several antennas, from several calibration data sets measured in-flight by said goniometry apparatus (102), each associated with a measured angular position and comprising an amplitude datum and a phase datum measured by each antenna of said antenna array at said measured position, said method (300) comprising, for an estimated angular position (404), a phase (200) of calculating an estimated calibration data set **characterized in that** said calculation phase (200) comprising the following steps:

   for each measured position (402), normalizing (204) the data set measured at said measured position, with respect to the phase data measured by each antenna, said normalizing providing as many normalized data sets as there are antennas for each measured position;
   - for each antenna, calculating (206) a candidate data set by interpolating the measured data sets at said measured positions (402) and previously normalized with respect to the phase measured by said antenna;
   - for at least one candidate data set, a step (208) of calculating the energy of said candidate data set, comprising the following operations:

      • calculating the energy associated with each antenna in the candidate data set; and
      • calculating the energy of said candidate data set based on the energy associated with each antenna; and

   - selecting (210), as the estimated calibration data set, the candidate data set whose phase reference has the highest energy among said candidate data sets.

2. The method (300) according to the preceding claim, **characterized in that** the calculation phase (200) comprises a step (212) of calculating, for the estimated position (404), a covariance matrix, from the estimated data set, said covariance matrix comprising a vector representative of the reception difference between the antennas of the antenna array taken in pairs.

3. The method (300) according to any one of the preceding claims, **characterized in that** the calculation phase (200) is implemented for a plurality of estimated positions (404) to build a calibration table comprising a multitude of angular positions (402, 404) according to a predetermined angular distribution.

4. The method (300) according to the preceding claim, **characterized in that** the calibration table comprises only estimated positions, or a combination of estimated positions (404) and measured positions (402).

5. The method (300) according to the preceding claim, **characterized in that** the calibration table comprises angular positions (402, 404) distributed following a constant angular pitch.

6. The method (300) according to any one of the preceding claims, **characterized in that**, for at least one estimated position (404), the interpolation takes into account only the measured calibration data sets for adjacent measured positions (402) between which said estimated position (404) lies.

7. The method (300) according to any one of the preceding claims, **characterized in that**, for at least one estimated position (404), the interpolation is performed by the GRIDDATA interpolation function.

8. The method (300) according to any one of the preceding claims, **characterized in that** it comprises a phase (302) of acquiring, in-flight, calibration data sets for a plurality of measured angular positions, for at least one frequency.

9. A computer program comprising computer instructions which when executed by a computer implement the calculation phase (200) of the method (300) according to any one of the preceding claims.

10. A calibration table for an airborne goniometry apparatus (102) obtained by the method (300) according to any one of claims 1 to 8.

11. A data processing device configured to implement all the steps of the calculation phase (200) of the method (300) according to any one of claims 1 to 8.

12. An airborne goniometry apparatus (102) calibrated by the method (300) according to any one of claims 1 to 8.

**FIG. 1a**

**FIG. 1b**

200

Extraction données mesurées en vol pour plusieurs positions angulaires mesurées ⟋202

↓

Normalisation de chaque jeu de données par rapport à la phase de chaque antenne ⟋204

↓

Calcul de plusieurs jeux de données candidats par interpolation des jeux de données normalisés considérés par antenne ⟋206

↓

Calcul de l'énergie de chaque jeu de données candidat obtenu par interpolation ⟋208

↓

Sélection du jeu de données candidat de plus grand niveau d'énergie comme jeu données de calibration pour la position estimée ⟋210

↓

Calcul d'une grandeur de calibration de l'appareil de goniométrie pour la position ⟋212

## FIG. 2

300

Acquisition, en vol, de données de calibration pour une pluralité de positions angulaires mesurées ⟋302

## FIG. 3

Sélection du jeu de données candidat de plus grand niveau d'énergie comme jeu données de calibration pour la position estimée ⟋200

402

**FIG. 4a**

402          404

402

**FIG. 4b**

**EP 4 119 970 B1**

## RÉFÉRENCES CITÉES DANS LA DESCRIPTION

**Documents brevets cités dans la description**

- US 2004189524 A